# EUROPÄISCHE PATENTSCHRIFT

(11) **EP 3 181 209 B1**
(45) Veröffentlichungstag und Bekanntmachung des Hinweises auf die Patenterteilung: **06.05.2020**
(21) Anmeldenummer: 15200847.0
(22) Anmeldetag: 17.12.2015
(51) Int. Cl.: B01D 33/04, B01D 33/70, B01D 29/09, B01D 29/60, B01D 29/88

(54) **FILTERANLAGE FÜR FLÜSSIGKEITEN**
FILTRATION DEVICE FOR LIQUIDS
INSTALLATION DE FILTRE POUR LIQUIDES

(43) Veröffentlichungstag der Anmeldung: 21.06.2017
(73) Patentinhaber: Brinkmann Pumpen K.H. Brinkmann GmbH & Co. KG, 58791 Werdohl (DE)
(72) Erfinder: Helpertz, Markus, Dr. Ing., 44225 Dortmund (DE); Wenderott, Dirk, 44577 Castrop-Rauxel (DE)
(74) Vertreter: Ter Meer Steinmeister & Partner

(56) Entgegenhaltungen:
- DE-C1- 3 626 695
- US-A- 3 559 807
- US-A- 3 690 466
- US-A- 3 696 928
- US-A- 4 908 136

## Beschreibung

Die Erfindung betrifft eine Anlage zum Filtern von Flüssigkeiten in einer Werkzeugmaschine, mit einem Filterbett, einem über das Filterbett transportierbaren Filtermedium, einer durch das Filtermedium begrenzten Zulaufkammer für die zu filternde Flüssigkeit, einem Reintank für das Filtrat, und einer Pumpe, die dazu eingerichtet ist, das Filtrat aus dem Reintank zu Werkzeugen der Werkzeugmaschine zuzuführen, wobei das Filterbett und die Zulaufkammer in Transportrichtung des Filtermediums in eine stromaufwärtige Anschwemmzone und eine stromabwärtige Arbeitszone unterteilt sind, zum Auffangen des Filtrats, das das Filtermedium in der Anschwemmzone passiert hat, ein von dem Reintank getrenntes Auffangsystem vorgesehen ist, und ein Umwälzsystem dazu vorgesehen ist, das Filtrat aus dem Auffangsystem in die Zulaufkammer zurück zu leiten.

Solche Filteranlagen dienen beispielsweise zum Filtern von Kühlschmierstoffemulsionen.

Die Passage der Flüssigkeit durch das Filtermedium hindurch kann durch Schwerkraft getrieben sein oder durch ein Druckgefälle zwischen der Zulaufseite und der Filtratseite des Filterbettes. Das Druckgefälle kann entweder durch einen Überdruck auf der Zulaufseite oder einen Unterdruck auf der Filtratseite erzeugt werden. Bei bekannten Saugkammerfiltern begrenzen das Filterbett und das Filtermedium eine Saugkammer, in der ein Unterdruck aufrechterhalten wird, so dass die Flüssigkeit durch das Filtermedium hindurch gesaugt wird.

Das Filtermedium kann die Form eines endlosen Förderbandes haben, das über das Filterbett läuft und durch dieses abgestützt wird. Durch das feinporöse Filtermedium werden Schmutzpartikel zurückgehalten, die in der zu filternden Flüssigkeit suspendiert sind. Während des Filterungsprozesses baut sich deshalb auf dem Filtermedium ein Filterkuchen aus den zurückgehaltenen Schmutzpartikeln auf. Dadurch nimmt im Lauf der Zeit die Durchlässigkeit des Filtermediums ab, und dementsprechend steigt das Druckgefälle, das zur Aufrechterhaltung eines gegebenen Flüssigkeitsdurchsatzes durch das Filtermedium hindurch erforderlich ist. Um das Druckgefälle in einem akzeptablen Bereich zu halten, wird das Filtermedium kontinuierlich oder taktweise über das Filterbett transportiert, so dass auf der stromaufwärtigen Seite frisches Filtermedium zugeführt wird, das noch keinen Filterkuchen trägt, während auf der stromabwärtigen Seite ein mit einem dicken Filterkuchen beladener Abschnitt des Filtermediums das Filterbett verlässt. Das Filtermedium kann dann regeneriert, d.h., von dem Filterkuchen befreit werden und dann zur stromaufwärtigen Seite des Filterbettes zurückgeführt werden.

Innerhalb gewisser Grenzen ist der Aufbau eines Filterkuchens auf dem Filtermedium durchaus erwünscht, weil dieser Filterkuchen seinerseits als Filtermedium wirkt und die Filterwirkung insbesondere für Schmutzpartikel mit kleinem Durchmesser verbessert. Auf der stromaufwärtigen Seite des Filterbettes, wo sich noch kein nennenswerter Filterkuchen gebildet hat, ist die Wirksamkeit des Filtermediums deshalb reduziert, so dass das Filtrat noch einen relativ großen Anteil an Schmutzpartikeln enthält. Zur stromabwärtigen Seite des Filtermediums hin nimmt aufgrund der Wirkung des Filterkuchens die Häufigkeit der Schmutzpartikel im Filtrat ab. Wenn sich das in verschiedenen Zonen des Filterbettes erhaltene Filtrat im Reintank mischt, erhält man letztlich ein Filtrat mit einem Gehalt an Schmutzpartikeln, der größer ist als bei dem Filtrat, das zunächst im stromabwärtigen Bereich des Filterbettes erhalten wird. Wenn, wie es typischerweise bei Saugkammerfiltern der Fall ist, das Filtermedium taktweise über das Filterbett transportiert wird, beobachtet man eine Schwankung des Gehalts an Schmutzpartikeln im Takt des Filterbandtransports. In der Phase, in der auf der stromaufwärtigen Seite frisches Filtermedium zugeführt wird, kann der Gehalt an Schmutzpartikeln so stark ansteigen, dass es zu Schädigungen an nachgeschalteten Aggregaten wie Pumpen oder dergleichen kommen kann.

Eine Filteranlage nach dem Oberbegriff des Anspruchs 1 ist in U 3 690 466 A beschrieben.

US 4 908 136 A beschreibt eine Vorrichtung zur Ionenaustauschbehandlung eines Filterkuchens, bei der eine Ionenaustauchlösung in einer Kaskade durch einen Abschnitt des Filterkuchens geleitet, aufgefangen und zu einem weiter stromaufwärts gelegenen Abschnitt des Filterkuchens zurückgeführt wird.

Aufgabe der Erfindung ist es, eine Filteranlage zu schaffen, die es bei hoher Effizienz ermöglicht, ein Filtrat von gleichbleibend hoher Qualität zu erhalten.

Diese Aufgabe wird erfindungsgemäß dadurch gelöst,dass zum Sammeln der zu filternden Flüssigkeit ein getrennt von dem Auffangsystem ausgebildeter Schmutztank vorgesehen ist, der mit einem Zulauf in der Anschwemmzone verbunden ist und aus dem die Flüssigkeit über eine Pumpe und eine Zulaufleitung in die Zulaufkammer zuführbar ist, und dass das Auffangsystem eine Auffangkammer aufweist, die über das Umwälzsystem mit einem Zulauf in der Arbeitszone verbunden ist.

Das Filtrat, dass das Filtermedium in der Anschwemmzone passiert hat, wo sich noch kein ausreichender Filterkuchen aufgebaut hat, und das deshalb noch einen hohen Gehalt an Schmutzpartikeln hat, wird somit nicht unmittelbar in den Reintank geleitet, sondern wird über das Auffangsystem und das Umwälzsystem in die Zulaufkammer zurückgeführt, so dass es das Filtermedium erneut passiert. Zumindest ein Teil der auf diese Weise zurückgeleiteten Flüssigkeit wird dann beim zweiten Durchgang das Filtermedium in der Arbeitszone passieren, wo aufgrund des dort vorhandenen Filterkuchens auch kleinere Schmutzpartikel zurückgehalten werden, so dass letztlich nur ein Filtrat von hoher Qualität in den Reintank gelangt.

Das Auffangsystem weist einen Schmutztank auf, in dem auch die zu filternde Flüssigkeit zwischengespeichert wird und aus dem sie zur Zulaufkammer der Filteranlage gefördert wird.

Außerdem weist das Auffangsystem eine vom Schmutztank getrennte Auffangkammer auf. Die Zulaufkammer ist in gleicher Weise wie das Filterbett in eine Anschwemmzone und eine Arbeitszone unterteilt. Die Flüssigkeit wird dann aus dem Schmutztank zumindest zum größten Teil in die Anschwemmzone der Zulaufkammer geleitet, so dass aufgrund des hohen Schmutzgehalts dieser Flüssigkeit der Aufbau eines Filterkuchens beschleunigt wird. Das grob gefilterte Filtrat aus der Auffangkammer wird dagegen überwiegend in die Arbeitszone der Zulaufkammer eingeleitet, so dass es nicht nochmals über die Auffangkammer und das Umwälzsystem rezirkuliert wird, sondern beim zweiten Durchgang durch das Filtermedium in den Reintank gelangt.

Vorteilhafte Ausgestaltungen und Weiterbildungen der Erfindung sind in den Unteransprüchen angegeben.

Wahlweise kann am Einlass der Zulaufkammer, insbesondere am Einlass der Anschwemmzone der Zulaufkammer eine Dosiereinrichtung zum Eindosieren von Filterhilfsstoffen in die Flüssigkeit vorgesehen sein, so dass beispielsweise durch Zugabe von Flockungsmittel oder anderen Hilfsstoffen der Aufbau des Filterkuchens weiter beschleunigt wird.

In einer zweckmäßigen Ausführungsform ist eine Messeinrichtung zur Messung des Druckgefälles zwischen der Zulaufseite und der Filtratseite der Anschwemmzone vorgesehen und das Umwälzsystem, mit dem das Filtrat aus der Auffangkammer in die Zulaufkammer zurückgeleitet wird, wird in Abhängigkeit vom gemessenen Druckgefälle geregelt.

Wahlweise kann auch eine Messstation vorgesehen sein, mit der der Gehalt an Schmutzpartikeln in dem Filtrat, das das Filtermedium in der Anschwemmzone passiert hat, kontinuierlich oder periodisch überwacht wird.

Im folgenden werden Ausführungsbeispiele anhand der Zeichnung näher erläutert.

Es zeigen:
- Fig. 1: ein Blockdiagramm einer Filteranlage; und
- Fig. 2: ein Blockdiagramm einer Filteranlage gemäß einem Ausführungsbeispiel der Erfindung.

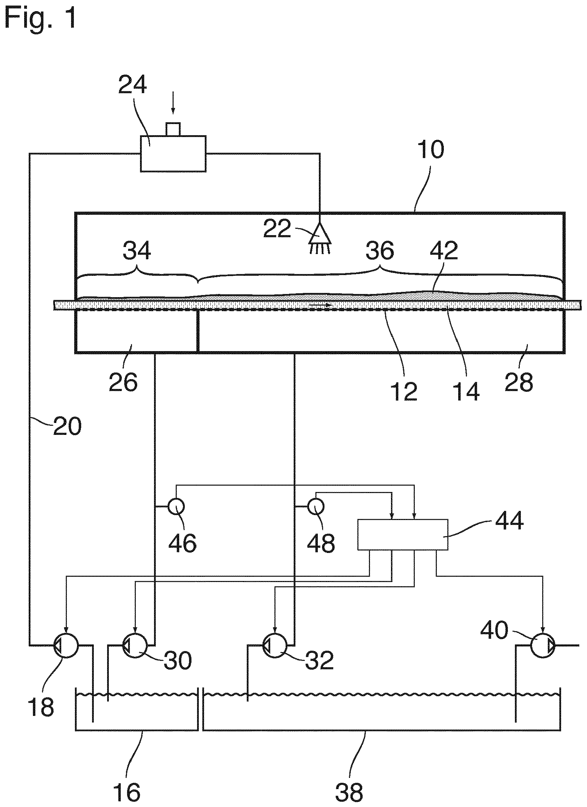

Die in Fig. 1 gezeigte Filteranlage weist eine Zulaufkammer 10 auf, die an der Unterseite durch ein für Flüssigkeit durchlässiges Filterbett 12 begrenzt wird. Auf dem Filterbett 12 liegt ein Filtermedium 14 auf, das die Form eines endlosen Bandes hat und in Pfeilrichtung, von links nach rechts in Fig. 1, über das Filterbett 12 transportiert wird.

Die zu filternde Flüssigkeit, beispielsweise eine Kühlschmierstoffemulsion, die von den Werkzeugen einer Werkzeugmaschine zurückfließt und mit Spänen und anderen Verunreinigungen beladen ist, wird in einem Schmutztank 16 gesammelt und von dort mit einer Pumpe 18 über eine Zulaufleitung 20 zu einem Zulauf 22 in der Zulaufkammer 10 gefördert, so dass die Oberseite des Filtermediums 14 innerhalb der Zulaufkammer 10 vollflächig mit einer Flotte aus der zu filternden Flüssigkeit bedeckt ist. Im gezeigten Beispiel enthält die Zulaufleitung 20 noch eine Dosiereinrichtung 24 zum Zudosieren von Filterhilfsstoffen. Wahlweise können die Filterhilfsstoffe auch im Schmutztank 16 zudosiert werden.

An der Unterseite des Filterbettes 12 sind zwei Saugkammern 26, 28 angeordnet, die in Transportrichtung des Filtermediums 14 aufeinanderfolgen und jeweils nach oben durch das Filterbett 12 begrenzt werden. In den Saugkammern 26 und 28 wird mit Pumpen 30 und 32 jeweils ein Unterdruck aufrechterhalten, so dass die Flüssigkeit aus der Zulaufkammer 10 durch das Filtermedium 14 hindurch in die Saugkammern 26, 28 gesaugt wird. Die beiden Saugkammern unterteilen das Filterbett 12 in eine - in Transportrichtung des Filtermediums gesehen stromaufwärtige - Anschwemmzone 34 und eine - stromabwärtige - Arbeitszone 36.

Die Flüssigkeit, die das Filtermedium 14 innerhalb der Anschwemmzone 34 passiert hat und als Grobfiltrat in die Saugkammer 26 gesaugt wurde, wird durch die Pumpe 30 in den Schmutztank 16 gefördert, der somit zugleich eine Auffangkammer für dieses Grobfiltrat bildet. Die Pumpen 30 und 18, die Zulaufleitung 20 und der Zulauf 22 bilden somit zusammen ein Umwälzsystem, mit dem das Grobfiltrat aus der Ansaugkammer 26 in die Zulaufkammer 10 zurückgeleitet wird.

Die Flüssigkeit, die das Filtermedium 14 in der Arbeitszone 36 passiert hat und als Feinfiltrat in die Ansaugkammer 28 gelangt ist, wird mit der Pumpe 32 in einen Reintank 38 geleitet und kann von dort mit Hilfe einer weiteren Pumpe 40 wieder zu den Werkzeugen der Werkzeugmaschine zugeführt werden.

In der zu filternden Flüssigkeit, die sich in der Zulaufkammer 10 befindet, sind Schmutzpartikel unterschiedlicher Größen suspendiert. Zumindest die größeren dieser Schmutzpartikel werden bei der Passage durch das feinporige Filtermedium 14 zurückgehalten, so dass sich auf der Oberseite des Filtermediums ein Filterkuchen 42 aufbaut. Da das Filtermedium 14 von links nach rechts in Fig. 1 über das Filterbett 12 transportiert wird, beispielsweise taktweise, hat der Teil des Filtermediums 14, der sich in der Arbeitszone 36 befindet, bereits eine längere Verweilzeit in der Zulaufkammer 10 hinter sich als der Teil, der sich noch in der Anschwemmzone 34 befindet. Demzufolge hat der Filterkuchen 42 in der Arbeitszone 36 eine größere Dicke erreicht als in der Anschwemmzone 34. Wenn im nächsten Vorschubtakt das Filtermedium 14 weiter nach rechts bewegt wird, beispielsweise um eine Distanz, die der Länge der Anschwemmzone 34 entspricht, so wird das Filtermedium in der Anschwemmzone 34 vollständig durch einen neuen Abschnitt des Filtermediums ersetzt, auf dem sich noch kein Filterkuchen befindet. Andererseits wird ein Teil des Filtermediums, auf dem sich ein dicker Filterkuchen befindet, am rechten Ende aus der Zulaufkammer 10 ausgetragen.

Der Filterkuchen 42 vermindert die Durchlässigkeit des Filters und kann insbesondere auch feinkörnige Schmutzpartikel zurückhalten, die an sich noch durch die Poren des Filtermediums 14 hindurchtreten könnten. Auf diese Weise wird durch den Filterkuchen 42 die Filterwirkung verstärkt, so dass man ein Filtrat mit höherer Qualität erhält, nämlich ein Filtrat mit einem geringeren Gehalt an Schmutzpartikeln, insbesondere einem geringeren Gehalt an feinkörnigen Schmutzpartikeln.

In der Anschwemmzone 34, in der sich noch kein Filterkuchen oder nur ein Filterkuchen geringer Dicke auf dem Filtermedium befindet, ist die Filterwirkung geringer, so dass das hier entstehende Grobfiltrat noch einen größeren Anteil an Schmutzpartikeln enthält. Dieses Grobfiltrat gelangt jedoch nicht unmittelbar in den Reintank 38 und führt deshalb nicht zu einer Verschlechterung der Qualität des Filtrats im Reintank 38, insbesondere auch dann nicht, wenn gerade ein frischer Abschnitt des Filtermediums in die Anschwemmzone 34 transportiert wurde. Erst wenn dieses Grobfiltrat durch das Umwälzsystem (Pumpen 30, 18, Zulaufleitung 20 und Zulauf 22), zur Zulaufkammer 10 zurückgeführt wurde und dann den Filterkuchen 42 und das Filtermedium 14 in der Arbeitszone 36 passiert, gelangt es gereinigt in den Reintank 38.

Eine elektronische Regeleinrichtung 44 nimmt ein Anforderungssignal von der Werkzeugmaschine sowie Signale von Drucksensoren 46 und 48 auf, die den Druck in den Saugkammern 26 und 28 messen, und regelt den Betrieb der Pumpen 18, 30, 32 und 40 sowie den Vorschub des Filtermediums 14. Dabei wird die Förderleistung der Pumpe 40 so geregelt, dass der Kühlschmierstoffbedarf an den Werkzeugen der Werkzeugmaschine befriedigt wird. Der zurücklaufende, verunreinigte Kühlschmierstoff wird im Schmutztank 16 gesammelt. Der Betrieb der Pumpe 18 wird so geregelt, dass der Pegel im Schmutztank 16, der in bekannter Weise mit einem Füllstandssensor gemessen wird, einen vorgegebenen oberen Grenzwert nicht überschreitet. Der Betrieb der Pumpen 30 und 32 wird so geregelt, dass die Menge an Flüssigkeit in der Zulaufkammer 10 annähernd konstant gehalten wird. Dabei kann jedoch das Verhältnis der Förderleistungen der Pumpen 30 und 32 in Abhängigkeit von der Entnahme an Flüssigkeit aus dem Reintank 38, also in Abhängigkeit von der Förderleistung der Pumpe 40 variieren. Bei hoher Entnahmemenge wird die Förderleistung der Pumpe 32 zugunsten der Förderleistung der Pumpe 30 erhöht, damit im Reintank 38 stets ein ausreichender Vorrat an gereinigter Flüssigkeit bereitgestellt wird. Bei geringerer Entnahmemenge kann dagegen die Pumpe 32 gedrosselt und dafür die Förderleistung der Pumpe 30 erhöht werden, so dass ein größerer Anteil der Flüssigkeit aus der Zulaufkammer 10 in die Saugkammer 26 angesaugt wird, um den Aufbau des Filterkuchens in der Anschwemmzone zu beschleunigen. Andererseits kann die Förderleistung der Pumpe 30 gedrosselt werden, wenn der Drucksensor 46 anzeigt, dass sich in der Anschwemmzone 34 bereits ein beträchtlicher Filterkuchen aufgebaut hat und somit ein entsprechend großes Druckgefälle besteht.

Der Transport des Filtermediums 14 kann beispielsweise wie folgt gesteuert werden. Wenn der Drucksensor 48 anzeigt, dass das Druckgefälle einen bestimmten Schwellenwert erreicht hat, was auf einen entsprechend dicken Filterkuchen 42 in der Arbeitszone 36 hinweist, so wird geprüft, ob auch das vom Drucksensor 46 gemessene Druckgefälle in der Anschwemmzone 34 einen bestimmten Mindestwert erreicht hat, der anzeigt, dass bereits ein ausreichend dicker Filterkuchen auf dem Filtermedium vorhanden ist. Nur wenn diese Voraussetzung erfüllt ist, wird das Filtermedium 14 um einen Takt weitertransportiert. Auf diese Weise ist sichergestellt, dass der Filterkuchen 42 in der Arbeitszone 36 auch an der dünnsten Stelle noch so dick ist, dass die geforderte Mindest-Filterwirkung erreicht wird. In Ausnahmefällen, wenn der Füllstand im Reintank 38 zu niedrig wird, kann das Filtermedium auch dann weitertransportiert werden, wenn sich in der Anschwemmzone noch kein ausreichender Filterkuchen gebildet hat. Vorrang hat dann die Erhöhung der Filterleistung in der Arbeitszone.

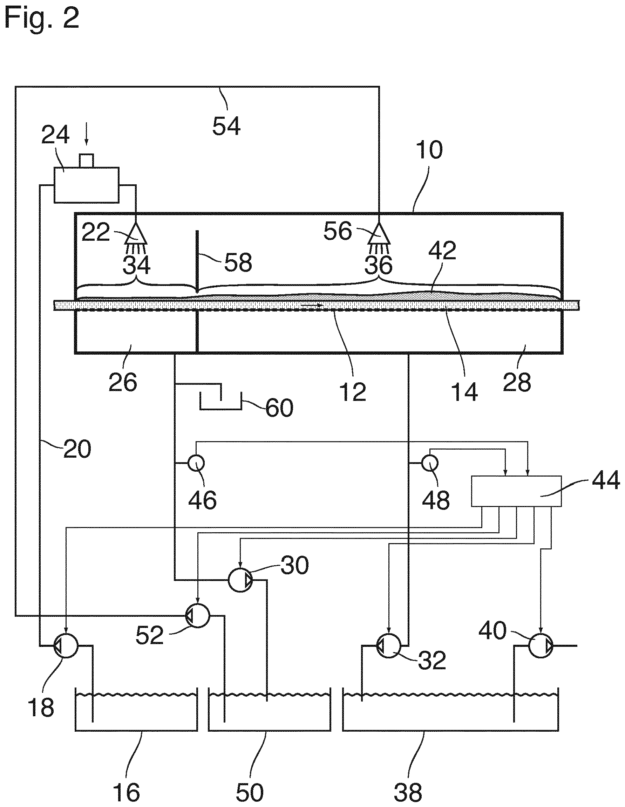

Fig. 2 zeigt ein Ausführungsbeispiel der Erfindung, das auf dem oben beschriebenen Prinzip aufbaut sich von der Filteranlage nach Fig. 1 vor allem dadurch unterscheidet, dass die Pumpe 30 das Grobfiltrat aus der Saugkammer 26 nicht in den Schmutztank 16 fördert, sondern in eine separate Auffangkammer 50. Von dort gelangt das Grobfiltrat über ein separates Umwälzsystem, das durch eine Pumpe 52, eine Rückführungsleitung 54 und einen Zulauf 56 gebildet wird, in die Zulaufkammer 10.

Außerdem ist in diesem Beispiel die Zulaufkammer 10 durch einen Überlauf 58 unterteilt, so dass sie ebenso wie das Filterbett 12 eine Anschwemmzone 34 und eine Arbeitszone 36 bildet. Über den Zulauf 56 gelangt das Grobfiltrat direkt in die Arbeitszone 36. Die ungefilterte Flüssigkeit aus dem Schmutztank 16 gelangt hingegen über die Pumpe 18, die Zulaufleitung 20, die Dosiereinrichtung 24 und den Zulauf 22 in die Anschwemmzone 34 der Zulaufkammer.

Bei dieser Anordnung kann der Aufbau des Filterkuchens in der Anschwemmzone 34 beschleunigt werden, da über den Zulauf 22 ausschließlich stark verunreinigte Flüssigkeit auf das Filtermedium geleitet wird. Umgekehrt wird das Grobfiltrat, das über die Rückführungsleitung 54 zurückgeführt wurde, ausschließlich in die Arbeitszone 36 eingeleitet, so dass eine entsprechend hohe Menge an Feinfiltrat für den Reintank 38 zur Verfügung gestellt wird. Abgesehen von Extremsituationen, in denen Flüssigkeit über den Überlauf 58 überläuft, wird somit vermieden, dass die Flüssigkeit mehrfach zwischen der Zulaufkammer 10 und der Auffangkammer 26 umgewälzt wird.

Die Pumpe 52 wird durch die Regeleinrichtung 44 so geregelt, dass ihre Förderleistung zumindest auf lange Sicht der Förderleistung der Pumpe 32 entspricht.

In diesem Beispiel ist zusätzlich zu dem Drucksensor 46 eine Messstation 60 vorgesehen, mit der sich eine Probe des Grobfiltrats aus der Saugkammer 26 entnehmen und auf ihren Gehalt an Schmutzpartikeln untersuchen lässt. Der Transport des Filtermediums kann deshalb wahlweise auch anhand der in der Messstation erhaltenen Ergebnisse gesteuert werden.

## Patentansprüche

1. Anlage zum Filtern von Flüssigkeiten in einer Werkzeugmaschine, mit einem Filterbett (12), einem über das Filterbett transportierbaren Filtermedium (14), einer durch das Filtermedium (14) begrenzten Zulaufkammer (10) für die zu filternde Flüssigkeit, einem Reintank (38) für das Filtrat, und einer Pumpe (40), die dazu eingerichtet ist, das Filtrat aus dem Reintank zu Werkzeugen der Werkzeugmaschine zuzuführen, wobei dass das Filterbett (12) und die Zulaufkammer (10) in Transportrichtung des Filtermediums (14) in eine stromaufwärtige Anschwemmzone (34) und eine stromabwärtige Arbeitszone (36) unterteilt sind, zum Auffangen des Filtrats, das das Filtermedium (14) in der Anschwemmzone (34) passiert hat, ein von dem Reintank (38) getrenntes Auffangsystem (26, 16; 50) vorgesehen ist, und ein Umwälzsystem (18, 20, 22; 52, 54) dazu vorgesehen ist, das Filtrat aus dem Auffangsystem (26,50) in die Zulaufkammer (10) zurück zu leiten, **dadurch gekennzeichnet, dass** zum Sammeln der zu filternden Flüssigkeit ein getrennt von dem Auffangsystem (26, 50) ausgebildeter Schmutztank (16) vorgesehen ist, der mit einem Zulauf (22) in der Anschwemmzone (34) verbunden ist und aus dem die Flüssigkeit über eine Pumpe (18) und eine Zulaufleitung (20) in die Zulaufkammer (10) zuführbar ist, und dass das Auffangsystem eine Auffangkammer (50) aufweist, die über das Umwälzsystem (52, 54) mit einem Zulauf (56) in der Arbeitszone (36) verbunden ist.

2. Anlage nach Anspruch 1, bei der das Auffangsystem einen Schmutztank (16) aufweist, der auch zum Sammeln der zu filternden Flüssigkeit dient.

3. Anlage nach einem der vorstehenden Ansprüche, mit mindestens einem Drucksensor (46) zur Messung eines Druckgefälles über dem Filtermedium (14) in der Anschwemmzone (34).

4. Anlage nach einem der vorstehenden Ansprüche, mit einer Messeinrichtung (60) zur Messung des Gehalts an Schmutzpartikeln in dem Filtrat, das das Filtermedium (14) in der Anschwemmzone (34) passiert hat.

5. Anlage nach Anspruch 3 oder 4, mit einer elektronischen Regeleinrichtung (44) zur Steuerung des Transports des Filtermediums (14) in Abhängigkeit von einem Signal des Drucksensors (46) und/oder der Messeinrichtung (60).

6. Anlage nach einem der vorstehenden Ansprüche, mit einer Dosiereinrichtung (24) zum Eindosieren von Filterhilfsstoffen in die zu filternde Flüssigkeit.

7. Anlage nach den Ansprüchen 1 und 6, bei der die Dosiereinrichtung (24) mit dem Schmutztank (16) und/oder dem Zulauf (22) in der Anschwemmzone (34) verbunden ist.

## Claims

1. A device for filtering liquids in a machine tool, the device having a filter bed (12), a filter medium (14) adapted to be conveyed over the filter bed, an intake chamber (10) for the liquid to be filtered, the intake chamber being delimited by the filter medium (14), a clean tank (38) for the filtered liquid, and a pump (40) configured to supply the filtered liquid from the clean tank to tools of the machine tool, the filter bed (12) and the intake chamber (10) being divided, in a transport direction of the filter medium (14), into an upstream wash-up zone (34) and a downstream working zone (36), a collection system (26, 15; 50) being provided for collecting the filtered liquid that has passed through the filter medium (14) in the wash-up zone (34), the collection system being separate from the clean tank (38), and a circulation system (18, 20, 22; 52, 54) being provided for recirculating the filtered liquid from the collection system (26, 50) into the intake chamber (10), **characterized in that** a mud-tank (16) is provided for collecting the liquid to be filtered, the mud-tank being provided separately from the collection system (26, 50) and being connected to an inlet port (22) in the wash-up zone (34), the liquid from the mud-tank being capable of being supplied into the intake chamber (10) via a pump (18) and an intake line (20), and the collection system has a collection chamber (50) that is connected to an inlet port (56) in the working zone (26) via the circulation system (52, 54).

2. The device according to claim 1, wherein the collection system has a mud-tank (16) that is provided also for collecting the liquid to be filtered.

3. The device according to any of the preceding claims, having at least one pressure sensor (46) for measuring a pressure drop across the filter medium (14) in the wash-up zone (34).

4. The device according to any of the preceding claims, comprising a measuring device (60) for measuring a content of mud particles in the filtered liquid that has passed through the filter medium (14) in the wash-up zone (34).

5. The device according to claim 3 or 4, having an electronic control system (44) for controlling the transport of the filter medium (14) in response to a signal from the pressure sensor (46) and/or the measuring device (60).

6. The device according to any of the preceding claims, comprising a dosing system (24) for dosing filter-assisting additives into the liquid to be filtered.

7. The device according to the claims 1 and 6, wherein the dosing system (24) is connected to the mud-tank (16) and/or to the intake port (22) in the wash-up zone (34).

## Revendications

1. Installation destinée à filtrer des liquides dans une machine-outil, comportant un lit filtrant (12), un milieu filtrant (14) pouvant être transporté au-dessus du lit filtrant, une chambre d'alimentation (10) délimitée par le milieu filtrant (14) pour le liquide à filtrer, un réservoir propre (38) pour le filtrat, et une pompe (40) adaptée pour acheminer le filtrat du réservoir propre à des outils de la machine-outil, dans laquelle le lit filtrant (12) et la chambre d'alimentation (10) sont divisées, dans une direction de transport du milieu filtrant (14), en une zone de dépôt amont (34) et une zone de travail aval (36) pour recevoir le filtrat qui a franchi le milieu filtrant (14) dans la zone de dépôt (34), dans laquelle un système de réception (26, 16 ; 50) séparé du réservoir propre (38) est prévu et un système de circulation (18, 20, 22 ; 52, 54) est prévu afin de réintroduire le filtrat provenant du système de réception (26, 50) dans la chambre d'alimentation (10), **caractérisée en ce qu'**un réservoir d'impuretés (16) formé séparément du système de réception (26, 50) est prévu pour recueillir le liquide à filtrer, lequel réservoir d'impuretés est relié à une alimentation (22) dans la zone de dépôt (34) et à partir duquel le liquide peut être acheminé dans la chambre d'alimentation (10) par l'intermédiaire d'une pompe (18) et d'une conduite d'alimentation (20), et **en ce que** le système de réception comporte une chambre de réception (50) qui est reliée à une alimentation (56) dans la zone de travail (36) par l'intermédiaire du système de circulation (52, 54).

2. Installation selon la revendication 1, dans laquelle le système de réception comporte un réservoir d'impuretés (16) qui sert également à recueillir le liquide à filtrer.

3. Installation selon l'une des revendications précédentes, comportant au moins un capteur de pression (46) pour mesurer une chute de pression au-dessus du milieu filtrant (14) dans la zone de dépôt (34).

4. Installation selon l'une des revendications précédentes, comportant un dispositif de mesure (60) pour mesurer la teneur en particules d'impuretés dans le filtrat qui a franchi le milieu filtrant (14) dans la zone de dépôt (34).

5. Installation selon la revendication 3 ou 4, comportant un dispositif de régulation électronique (44) pour commander le transport du milieu filtrant (14) en fonction d'un signal du capteur de pression (46) et/ou du dispositif de mesure (60).

6. Installation selon l'une des revendications précédentes, comportant un dispositif de dosage (24) pour doser des adjuvants de filtration dans le liquide à filtrer.

7. Installation selon les revendications 1 et 6, dans laquelle le dispositif de dosage (24) est raccordé au réservoir d'impuretés (16) et/ou à l'alimentation (22) dans la zone de dépôt (34).
